# EUROPEAN PATENT APPLICATION

(11) **EP 4 484 223 A1**
(43) Date of publication of application: **01.01.2025**
(21) Application number: 23182525.8
(22) Date of filing: 29.06.2023
(51) Int. Cl.: B60R 1/06, B60R 1/072, B60R 1/08

(54) **AUTOMOTIVE EXTERIOR MIRROR, AUTOMOTIVE EXTERIOR MIRROR ASSEMBLY AND VEHICLE**

(71) Applicant: Volvo Car Corporation, 405 31 Göteborg (SE)
(72) Inventor: JARTOFT, Hans, 40531 Göteborg (SE)
(74) Representative: Maiwald GmbH

(57) **Abstract**

The disclosure relates to an automotive exterior mirror (10) for attachment to an automotive exterior mirror assembly (1), the automotive exterior mirror (10) comprising a viewing portion (12) having a viewing area (13), the viewing area (13) being at least partially reflective such that reflections may be viewed in the viewing area (13), and a bezel portion (14) having a non-viewing area (15), the non-viewing area (15) being less reflective than the viewing area (13), the viewing portion (12) being adjacent to the bezel portion (14) and the bezel portion (14) being configured to form a bezel (2) of the automotive exterior mirror assembly (1), when the automotive exterior mirror (10) is used therein.

## Description

### TECHNICAL FIELD

The present disclosure relates to an automotive exterior mirror for an automotive exterior mirror assembly, the automotive exterior mirror assembly and a vehicle having the automotive exterior mirror assembly.

### BACKGROUND ART

Automotive exterior mirrors are typically made of a glass piece with a reflective coating on its surface. This glass piece is bonded to a glass carrier plate such that the automotive exterior mirror can be designed as an adjustable automotive exterior mirror, i.e., designed to move relative to a housing of an automotive exterior mirror assembly containing the automotive exterior mirror. A glass piece attached to a carrier plate will inherently have to be slightly oversized for edge cutting, grinding and assembly tolerance variation versus the required field of view size.

Alternatively, the glass piece may be bonded to a larger and visible bezel providing a rounded edge and some means of attachment to the housing, if the glass piece is designed not to move relative to the housing of the automotive exterior mirror assembly.

Further, alternatively, an adjustable automotive exterior mirror may be made from a polymer, which may reduce the build variation of the automotive exterior mirror but also requires some means of attachment to the housing. However, when such automotive exterior mirror is designed in a conventional single piece design, optical distortion phenomena develop by the stress and/or molding effects due to the geometry of integrated attachments.

### SUMMARY

At least some of the above-described problems are at least partially solved or alleviated by the subject matter of the independent claims of the present disclosure, wherein further examples are incorporated in the dependent claims.

According to a first aspect, there is provided an automotive exterior mirror for attachment to an automotive exterior mirror assembly. The automotive exterior mirror may comprise a viewing portion having a viewing area. The viewing area may be at least partially reflective such that reflections may be viewed in the viewing area. The automotive exterior mirror may comprise bezel portion having a non-viewing area. The non-viewing area may be less reflective than the viewing area, which may include being substantially non-reflective. The viewing portion may be adjacent to the bezel portion. The bezel portion may be configured to form a bezel of the automotive exterior mirror assembly, when the automotive exterior mirror is used therein or, in other words, attached thereto.

Accordingly, the automotive exterior mirror of this disclosure may provide for both, the viewing portion, which has a viewing area, and a bezel portion, which has a non-viewing area and forms a bezel of the automotive exterior mirror assembly, in which the automotive exterior mirror is used. In particular, the bezel portion may be configured such that when the automotive exterior mirror assembly with the automotive exterior mirror is viewed from the front or face (i.e., looking at the viewing area), the bezel of the automotive exterior mirror is given by the bezel portion. In particular, the bezel of the automotive exterior mirror may be given only by the bezel portion (and not also the housing and/or other parts of the automotive exterior mirror assembly) or at least together with the housing and/or other parts of the automotive exterior mirror assembly.

The automotive exterior mirror of this disclosure provides for several design and manufacturing improvements. For example, the viewing area of the automotive exterior mirror may be kept free of any disturbing attachment stress and molding effects. Also, for example, a transition from the viewing portion to the bezel portion may be seamless so that the automotive exterior mirror size can be fully utilized for viewing, eliminating any need to oversize the automotive exterior mirror for cutting, grinding and build variation.

The viewing area may be formed substantially on an entire surface or side of the viewing portion. Thereby, the viewing area may be maximized in size. The non-viewing area may be formed substantially on an entire surface or side of the bezel portion.

The automotive exterior mirror being for attachment to the automotive exterior mirror assembly may in particular mean that the automotive exterior mirror is configured for attachment to the automotive exterior mirror assembly, e.g., via a structural component of the automotive exterior mirror assembly, as will be described later. For this purpose, the automotive exterior mirror may comprise at least one connection portion, e.g., configured for connection to the structural component, as will be described later.

The viewing area may be at least partially reflective, which includes substantially full reflectivity, and fulfills the primary function of an automotive exterior mirror, which is to provide a viewing area to view reflections of objects in the surroundings therein, such as other vehicles, bicycles, pedestrians, etc. For example, the viewing area may have a substantially silver color. The bezel portion, on the other hand, has a non-viewing area, that is less reflective than the viewing area. The non-viewing area may in particular have a different color than the viewing area, e.g., substantially the color of the housing of the automotive exterior mirror assembly, which may be the color of the vehicle or another color, e.g., black. Accordingly, the non-viewing area may be designed to blend into the design and/or color scheme of the vehicle in which the automotive exterior mirror is being used, but not to provide any relevant reflective properties. In particular, the non-viewing area may be substantially non-reflective in the context of mirrors. This means that the non-viewing area cannot or at least should not reliably be used as a mirror area of the automotive exterior mirror to detect objects therein contrary to the viewing area. Thereby, the bezel portion forming the bezel of the automotive exterior mirror assembly does not distract the driver of the vehicle by reflecting objects at the bezel. Instead, the driver of the vehicle can focus on the main, in particular central, viewing area that may be surrounded by the bezel portion, only the viewing area providing the actual mirror properties in the automotive exterior mirror.

The viewing area being adjacent to the bezel portion may in particular mean that the bezel portion may surround or enclose the viewing area with its non-viewing area.

The bezel portion being configured to form the bezel of the automotive exterior mirror assembly may mean that the bezel portion may be accordingly sized and/or formed, for example. Also, the bezel portion may be configured to form at least a portion of a housing of the automotive exterior mirror assembly, in particular together with the housing of the automotive exterior mirror assembly. For example, the bezel portion may be designed to align with the housing, e.g., an edge of the housing. In this way, the bezel portion and the housing may be separated from another by means of a gap or clearance or, alternatively, touching each other or be attached to each other such that they are not being separated from one another by a gap or clearance. Further examples of the configuration of the bezel portion are described later.

In an example, the viewing portion and the bezel portion may be formed as a single integral part. In other words, the viewing portion and the bezel portion may be designed as one piece. This means that both, the viewing portion and the bezel portion, are made from the same material. Both portions may be casted together in a manufacturing process of the automotive exterior mirror. For example, the viewing portion and bezel portion may comprise or be made from a glass material and/or a polymer material or plastic material.

In an example, the bezel portion may comprise at least one connection portion configured for connection to a structural component of the automotive exterior mirror assembly. In particular, the at least one connection portion may be arranged opposite of the non-viewing area, in particular on a face or side of the bezel portion opposite of a face or side of the bezel portion on which the non-viewing area is located. The at least one connection portion enables attachment of the automotive exterior mirror to the automotive exterior mirror assembly, in particular for an adjustable automotive exterior mirror design. Advantageously, by having the at least one connection portion at the bezel portion of the automotive exterior mirror, no stress is imposed on the viewing portion. Also, this provides for an unobstructed face or side of the viewing portion opposite of the viewing area. Accordingly, an optional reflectance cell, as described later in more detail, may be positioned behind the viewing area without being obstructed or limited in design by means of the attachment of the automotive exterior mirror to the automotive exterior mirror assembly.

In an example, the viewing portion may be extending along a center segment of the automotive exterior mirror. The bezel portion may be extending along top, bottom and side segments of the automotive exterior mirror. The top, bottom and side segments may be surrounding, in particular enclosing, the center segment.

In an example, the bezel portion may be extending away from the viewing portion in a dimension oblique to a surface of the viewing area. In particular, the dimension may correspond to a thickness of the viewing portion, which may be measured between the two opposite faces or sides of the viewing portion. In particular the bezel portion may be extending in the dimension more than a thickness of the viewing portion. Thereby, the bezel portion may extend away from the viewing portion, where it may be arranged adjacent the housing of the automotive exterior mirror assembly, in particular such that the bezel portion seamlessly blends in with the design of the automotive exterior mirror assembly.

In an example, the bezel portion may be extending along the dimension in a curved shape. Thereby, a curvature of the automotive exterior mirror at the bezel portion may be given. The radius of such curvature may be 1200 mm or smaller, for example. The radius may be measured according to ECE-R 46, Annex 7, for example.

In an example, the viewing area may comprise a reflective coating. The non-viewing area may comprise a non-viewing coating. The non-viewing coating may be less reflective than the reflective coating, which includes that it may be substantially non-reflective. Accordingly, the viewing area may be provided by a reflective coating, which may be adhered to the viewing portion, for example. Also, the non-viewing area may be provided by a coating being less reflective than the viewing area or, alternatively, it may be formed by the material of the automotive exterior mirror. The coating of the non-viewing area and/or the material of the automotive exterior mirror may be the same as the one used on or for the housing of the automotive exterior mirror assembly. For example, the coating of the non-viewing area may correspond to a vehicle coating, e.g., at least in color and/or material.

In an example, the automotive exterior mirror may comprise a reflectance cell, the reflectance cell being positioned adjacent to the viewing area. In particular, the reflectance cell may be positioned adjacent and/or in parallel of an opposite side or face of the viewing area of the viewing portion. In other words, the reflectance cell may be arranged behind the viewing portion and/or inside of the housing of the automotive exterior mirror assembly. It may be attached directly to the automotive exterior mirror, e.g., at the bezel portion, and/or to the structural component if the automotive exterior mirror assembly, for example. The reflectance cell may be provided with certain properties or functions, e.g., (auto-)dimming properties or functions. For example, the reflectance cell may be designed as an electrochromic reflectance cell to provide an electrochromic automotive exterior mirror. The viewing portion may be designed at least partially transparent for the reflectance cell to provide the reflective properties on the viewing area of the viewing portion.

According to a second aspect, there is provided an automotive exterior mirror assembly comprising an automotive exterior mirror according to the first aspect of this disclosure and a housing attached to the automotive exterior mirror, the bezel portion forming the bezel of the automotive exterior mirror assembly.

The automotive exterior mirror assembly may comprise an attachment means for attachment to the body of a vehicle. The attachment means may be an attachment arm, for example. Further, the automotive exterior mirror assembly may comprise a housing. The housing may enclose internal components of the automotive exterior mirror assembly, such as a structural component and/or an actuator, for example. The structural component may be attaching the automotive exterior mirror to the actuator, for example. By means of the actuator, an adjustable automotive exterior mirror assembly may be provided. In particular, the automotive exterior mirror may be adjustable only together with the housing and with respect to the attachment means attaching the automotive exterior mirror assembly to the vehicle and/or the actuator.

In an example, the bezel portion of the automotive exterior mirror may be aligned with the housing such that the bezel portion and the housing form a common housing frame of the automotive exterior mirror assembly. In particular, the bezel portion and the housing may be touching each other or attached to each other or be separated from each other only by means of a gap or clearance, which may be extending along the entire bezel portion. Thereby, the design of the automotive exterior mirror and the housing may seamlessly blend together, which makes the manufacturing easy.

In an example, the automotive exterior mirror assembly may further comprise a structural component connecting the bezel portion of the automotive exterior mirror to the housing.

In an example, the automotive exterior mirror assembly may further comprise an actuator inside of the housing, the actuator being connected to the automotive exterior mirror and/or the housing by means of the structural component. The actuator may be an electric motor, for example.

In an example, the actuator may be configured to adjust a position of the automotive exterior mirror in conjunction with the housing. This means that both, the automotive exterior mirror and the housing are being adjusted in their positioned simultaneously when the actuator is actuated, e.g., by means of a user input on a user input device, e.g., a touch screen computer or a switch, in the vehicle or an accompanying device for controlling functions of the vehicle, e.g., a smartphone.

In an example, the structural component may have first connection portions and the bezel portion and/or the housing may have second connection portions corresponding in shape to the first connection portions for establishing a form fit connection between the structural component and the bezel portion and/or the housing. The first connection portions may be designed as recesses, for example. The second connection portions may be designed as clips or arms for form-fit with the recesses, for example. Such connection of the structural component to the bezel portion and/or the housing has the advantage of good serviceability compared to alternative connections, such as an adhesive connection, for example. When the structural component attaches to the bezel portion and the housing, the structural component is advantageously securing three parts with each other, i.e., the automotive exterior mirror, the housing and the actuator, by means of a single structural component.

According to a third aspect, there is provided a vehicle comprising the automotive exterior mirror assembly according to the second aspect of this disclosure.

The above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective view of an automotive exterior mirror assembly,
- Figure 2: shows a cross-sectional view of the automotive exterior mirror assembly, and
- Figure 3: shows a detail of the automotive exterior mirror assembly of Fig. 2 but with another automotive exterior mirror being used therein.

### DETAILED DESCRIPTION

The Figures are merely schematic representations and serve only to illustrate examples of the disclosure. Identical or equivalent elements are in principle provided with the same reference signs.

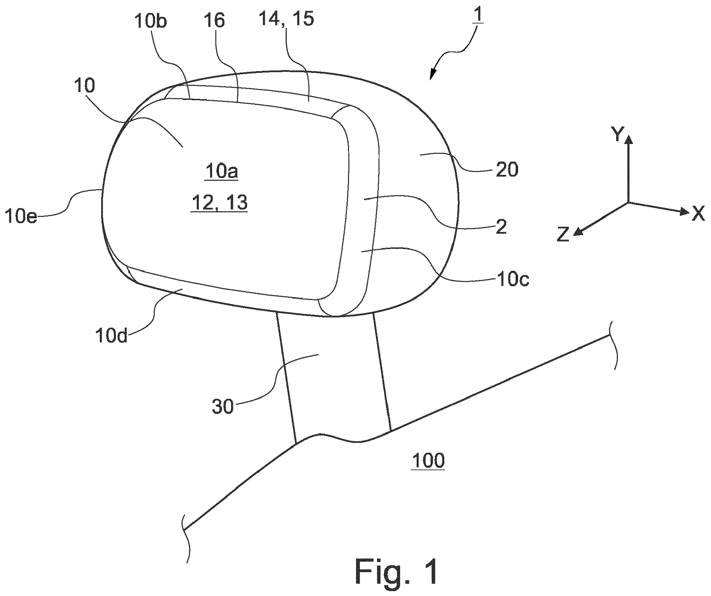

Figure 1 shows a perspective view of an automotive exterior mirror assembly 1, which comprises an automotive exterior mirror 10, a housing 20 and attachment means 30. The automotive exterior mirror 10 and the housing 20 are touching each other or are attached to each other. There may be a gap or clearance between the automotive exterior mirror 10 and the housing 20. By means of the attachment means 30, in this example in the form of an attachment arm, the automotive exterior mirror assembly 1 is attached to a vehicle 100, which is illustrated herein only partially with its body, to which the attachment means 30 directly or via another structural component behind it (not shown) may be attached

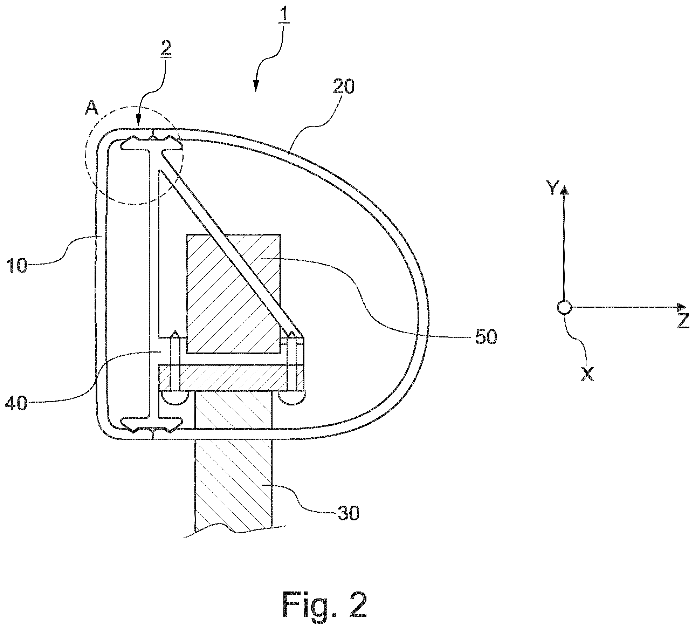

Figure 2 shows a cross-sectional view of the automotive exterior mirror assembly 1. As may be seen from Fig. 2, the automotive exterior mirror assembly 1 further comprises a structural component 40 and an actuator 50. The actuator 50 may be an electric motor, for example. The structural component 40 attaches the housing 20 and the automotive exterior mirror 10 to the actuator 50. By means of this configuration, the actuator 50 is configured to reposition the housing 20 and the automotive exterior mirror 10 relative to the vehicle 100 or its body or the attachment means 30 when being actuated.

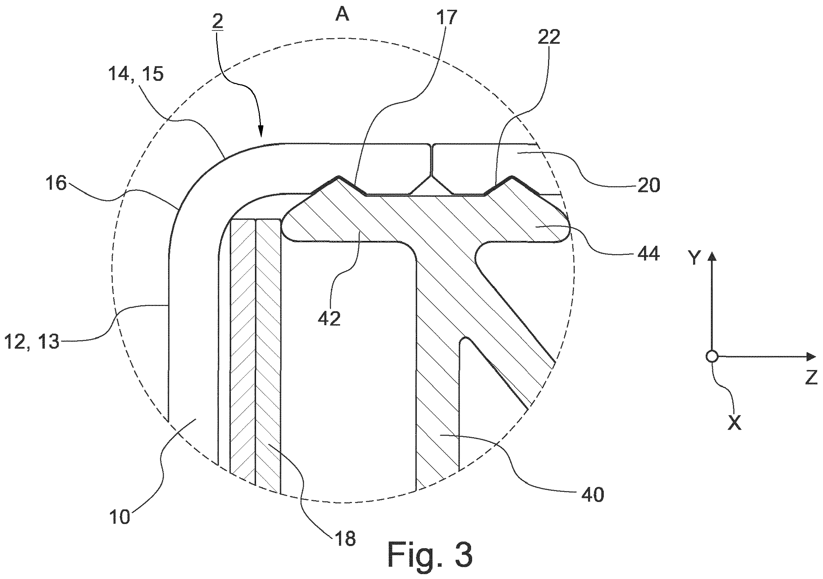

The automotive exterior mirror 10 may be designed as a single integral part from a single material, which may be a plastic or polymer or glass material, for example. The automotive exterior mirror 10 comprises two portions, namely a viewing portion 12 and a bezel portion 14. The two portions 12, 14 are separated from one another by means of a line 16 depicted in Figs. 1 and 3. This line 16 may be visible as a contrast between a viewing area 13 arranged on the viewing portion 12 and a non-viewing area 15 arranged on the bezel portion 14. Specifically, the viewing area may be reflective such that the reflections may be viewed in the viewing area 13, whereas the non-viewing area 15 is less reflective or substantially non-reflective. Accordingly, the actual mirror properties of the automotive exterior mirror 10, that is to provide a mirror area in which reflections, such as other vehicles, pedestrians, objects etc. may be viewed by a driver or passenger of a vehicle, may be provided by the viewing area 13 only. The bezel portion 14 on the other hand may not be providing a mirror area but delimited against it, where the line 16 is a delimitation line.

However, the bezel portion 14 still serves a further function in the automotive exterior mirror assembly 1 besides enclosing the viewing portion 12. This function is that it forms the bezel 2 of the automotive exterior mirror assembly 1 as seen throughout Figs. 1 to 3. That is, when the automotive exterior mirror assembly 1 is viewed from the front, i.e., in the direction along the Z-axis of the coordinate system X, Y, Z depicted in Figs. 1 to 3, the bezel portion 14 appears as the only bezel 2 of the automotive exterior mirror assembly 1. Further, the bezel portion 14 is aligned with the housing 20 such that the bezel portion 14 and the housing 20 form a common housing frame of the automotive exterior mirror assembly 1. The housing 20 is not protruding above the bezel portion 14 such that the automotive exterior mirror 1 would be enclosed by the housing 20 as is the case in many commonly known designs of automotive exterior mirror assemblies.

As may be further seen in Fig. 1, the automotive exterior mirror 10 generally comprises several segments 10a, 10b, 10c, 10d, 10e. Specifically, the automotive exterior mirror 10 comprises a central segment 10a, on which the viewing portion 12 is formed. Further, the automotive exterior mirror 10 comprises a top segment 10b, a bottom segment 10d and side segment 10c, 10e. These segments 10b, 10c, 10d, 10e are surrounding or enclosing the central segment 10a and the bezel portion 14 is being formed on them.

As further seen in Fig. 2, the segments 10b, 10c, 10d, 10e or the bezel portion 14 extends away from the central segment 10a or viewing portion 12 along the Z-axis and, in particular, towards the housing 20. The thickness of the viewing portion 12 is formed along the Z-axis. Accordingly, it can be said that the bezel portion 14 extends away from the viewing portion 12 in a direction of thickness of the viewing portion 12. Alternatively, it can be said that the bezel portion 14 extends away from the viewing portion 12 in a dimension oblique, in particular transverse, to a surface of the viewing area 13 or the viewing area 13, the dimension being along the Z-axis. The extension of the bezel portion 14 follows a curved shape. In the extension of the automotive exterior mirror 10 being provided by the bezel portion 14 formed in such way, the bezel portion 14 may be connected to the housing 20. In the interface or connection between the bezel portion 14 and the housing 20, a predefined gap or clearance may be provided. Alternatively, the respective surfaces of the bezel portion 14 and the housing 20 may be touching each other such that there is no gap or clearance.

The viewing area 13 may be comprising a reflective coating to provide the reflective properties of the viewing area 13, whereas the non-viewing area 15 may comprise a non-viewing coating being less reflective than the reflective coating of the viewing area 13, which may include that it is substantially non-reflective. The non-viewing coating may correspond to a body coating of the vehicle 100, for example, or any other coating different from the reflective coating and having less reflective properties such that the driver can focus on the viewing area 13 provided by the automotive exterior mirror 10 only when viewing the automotive exterior mirror 10.

Figure 3 shows the detail A of the automotive exterior mirror assembly 1 in Fig. 2 but with another automotive exterior mirror 10 than the one in Fig. 2, namely one with a reflectance cell 18. The reflectance cell 18 is positioned in parallel and adjacent, in particular behind, the viewing portion 12. In this case, the viewing area 13 does not need to have a reflective coating. Also, the viewing portion 12 or the entire automotive exterior mirror 10 may be configured at least partially transparent. Thereby, the reflectance cell 18 may provide the reflective properties for the viewing area 13 and possibly further functions such as auto-dimming functions, for example. The reflectance cell 18 may be attached to the automotive exterior mirror assembly 1 by any means such as, for example, adhesive between the automotive exterior mirror 10 and the reflectance cell 18 or any structural component, such as the structural component 18. In the example of Fig. 3, the reflectance cell 18 could be sandwiched between the automotive exterior mirror 10 and the structural component 40, for example.

As may be further seen from Fig. 3, the structural component 40 comprises first connection portions 42, 44 for connection with the automotive exterior mirror 10, specifically the bezel portion 14, and the housing 20. The bezel portion 14 and the housing 20 on the other hand comprise corresponding second connection portions 17, 22, which are in particularly corresponding in the way of shape to the first connection portions 42, 44 of the structural component to provide a form fit connection between the structural component 40 and the bezel portion 14 and the housing 20. In this example, the first connection portions 42, 44 are designed as clips or arms, whereas the second connection portions 17, 22 are designed as recesses for the clips or arms sized such that a form-fit connection is formed in order to attach the automotive exterior mirror 10 and the housing 20 via the structural component 40 to the actuator 50, thereby enabling adjustment of the position of the automotive exterior mirror assembly 1 when actuating the actuator 50.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims, the word "comprising" or "having" does not exclude other elements or steps and the indefinite article "a" or "an" does not exclude a plurality. The mere fact that certain measures are recited in mutually different dependent claims does not indicate that a combination of these measures cannot be used to advantage. Reference signs in the claims should not be construed as limiting the scope of the claims.

### LIST OF REFERENCE SIGNS

- 1: automotive exterior mirror assembly
- 2: bezel
- 10: automotive exterior mirror
- 10a: center segment
- 10b: top segment
- 10c, 10e: side segments
- 10d: bottom segment
- 12: viewing portion
- 13: viewing area
- 14: bezel portion
- 15: non-viewing area
- 16: line
- 17, 22: second connection portions
- 18: reflectance cell
- 20: housing
- 30: attachment means
- 40: structural component
- 42, 44: first connection portions
- 50: actuator
- 100: vehicle

## Claims

1. An automotive exterior mirror (10) for attachment to an automotive exterior mirror assembly (1), the automotive exterior mirror (10) comprising a viewing portion (12) having a viewing area (13), the viewing area (13) being at least partially reflective such that reflections may be viewed in the viewing area (13), and a bezel portion (14) having a non-viewing area (15), the non-viewing area (15) being less reflective than the viewing area (13), the viewing portion (12) being adjacent to the bezel portion (14) and the bezel portion (14) being configured to form a bezel (2) of the automotive exterior mirror assembly (1), when the automotive exterior mirror (10) is used therein.

2. The automotive exterior mirror (10) according to claim 1, the viewing portion (12) and the bezel portion (14) being formed as a single integral part.

3. The automotive exterior mirror (10) according to claim 1 or 2, the bezel portion (14) comprising at least one connection portion (17, 22) configured for connection to a structural component (40) of the automotive exterior mirror assembly (1).

4. The automotive exterior mirror (10) according to any of the previous claims, the viewing portion (12) extending along a center segment (10a) of the automotive exterior mirror (10) and the bezel portion (14) extending along top, bottom and side segments (10b, 10c, 10d, 10e) of the automotive exterior mirror (10), the top, bottom and side segments (10b, 10c, 10d, 10e) surrounding the center segment (10a).

5. The automotive exterior mirror (10) according to any of the previous claims, the bezel portion (14) extending away from the viewing portion (12) in a dimension oblique to a surface of the viewing area (13).

6. The automotive exterior mirror (10) according to claim 5, the bezel portion (14) extending along the dimension in a curved shape.

7. The automotive exterior mirror (10) according to any of the previous claims, the viewing area (13) comprising a reflective coating and the non-viewing area (15) comprising a non-viewing coating, the non-viewing coating being less reflective than the reflective coating.

8. The automotive exterior mirror (10) according to any of the previous claims, the automotive exterior mirror (10) comprising a reflectance cell (18), the reflectance cell (18) being positioned adjacent to the viewing area (13).

9. An automotive exterior mirror assembly (1) comprising an automotive exterior mirror (10) according to any of the previous claims and a housing (20) attached to the automotive exterior mirror (10), the bezel portion (14) forming the bezel (2) of the automotive exterior mirror assembly (1).

10. The automotive exterior mirror assembly (1) according to claim 9, the bezel portion (14) of the automotive exterior mirror (10) being aligned with the housing (20) such that the bezel portion (14) and the housing (20) form a common housing frame of the automotive exterior mirror assembly (1).

11. The automotive exterior mirror assembly (1) according to claim 9 or 10, the automotive exterior mirror assembly (1) further comprises a structural component (40) connecting the bezel portion (14) of the automotive exterior mirror (10) to the housing (20).

12. The automotive exterior mirror assembly (1) according to claim 11, the automotive exterior mirror assembly (1) further comprising an actuator (50) inside of the housing (20), the actuator (50) being connected to the automotive exterior mirror (10) and/or the housing (20) by means of the structural component (40).

13. The automotive exterior mirror assembly (1) according to claim 12, the actuator (50) being configured to adjust a position of the automotive exterior mirror (10) in conjunction with the housing (20).

14. The automotive exterior mirror assembly (1) according to any of claims 11 to 13, the structural component (40) having first connection portions (42, 44) and the bezel portion (14) and/or the housing (20) having second connection portions (17, 22) corresponding in shape to the first connection portions (42, 44) for establishing a form fit connection between the structural component (40) and the bezel portion (14) and/or the housing (20).

15. A vehicle (100) comprising the automotive exterior mirror assembly (1) according to any of claims 9 to 14.

## Amended claims

### Amended claims in accordance with Rule 137(2) EPC.

1. An automotive exterior mirror assembly (1) comprising an automotive exterior mirror (10), the automotive exterior mirror (10) comprising a viewing portion (12) having a viewing area (13), the viewing area (13) being at least partially reflective such that reflections may be viewed in the viewing area (13), and a bezel portion (14) having a non-viewing area (15), the non-viewing area (15) being less reflective than the viewing area (13), the viewing portion (12) being adjacent to the bezel portion (14) and the bezel portion (14) forming a bezel (2) of the automotive exterior mirror assembly (1), and a housing (20) attached to the automotive exterior mirror (10), wherein the automotive exterior mirror assembly (1) further comprises a structural component (40) connecting the bezel portion (14) of the automotive exterior mirror (10) to the housing (20).

2. The automotive exterior mirror assembly (1) according to claim 1, the viewing portion (12) and the bezel portion (14) being formed as a single integral part.

3. The automotive exterior mirror assembly (1) according to any of the previous claims, the viewing portion (12) extending along a center segment (10a) of the automotive exterior mirror (10) and the bezel portion (14) extending along top, bottom and side segments (10b, 10c, 10d, 10e) of the automotive exterior mirror (10), the top, bottom and side segments (10b, 10c, 10d, 10e) surrounding the center segment (10a).

4. The automotive exterior mirror assembly (10) according to any of the previous claims, the bezel portion (14) extending away from the viewing portion (12) in a dimension oblique to a surface of the viewing area (13).

5. The automotive exterior mirror assembly (1) according to claim 4, the bezel portion (14) extending along the dimension in a curved shape.

6. The automotive exterior mirror assembly (1) according to any of the previous claims, the viewing area (13) comprising a reflective coating and the non-viewing area (15) comprising a non-viewing coating, the non-viewing coating being less reflective than the reflective coating.

7. The automotive exterior mirror assembly (1) according to any of the previous claims, the automotive exterior mirror (10) comprising a reflectance cell (18), the reflectance cell (18) being positioned adjacent to the viewing area (13).

8. The automotive exterior mirror assembly (1) according to any of the previous claims, the bezel portion (14) of the automotive exterior mirror (10) being aligned with the housing (20) such that the bezel portion (14) and the housing (20) form a common housing frame of the automotive exterior mirror assembly (1).

9. The automotive exterior mirror assembly (1) according to any one of the previous claims, the automotive exterior mirror assembly (1) further comprising an actuator (50) inside of the housing (20), the actuator (50) being connected to the automotive exterior mirror (10) and/or the housing (20) by means of the structural component (40).

10. The automotive exterior mirror assembly (1) according to claim 9, the actuator (50) being configured to adjust a position of the automotive exterior mirror (10) in conjunction with the housing (20).

11. The automotive exterior mirror assembly (1) according to any of the previous claims, the structural component (40) having first connection portions (42, 44) and the bezel portion (14) and the housing (20) having second connection portions (17, 22) corresponding in shape to the first connection portions (42, 44) for establishing a form fit connection between the structural component (40) and the bezel portion (14) and the housing (20).

12. A vehicle (100) comprising the automotive exterior mirror assembly (1) according to any of the previous claims.
